# EUROPÄISCHE PATENTSCHRIFT

(11) **EP 1 108 227 B1**
(45) Veröffentlichungstag und Bekanntmachung des Hinweises auf die Patenterteilung: **02.01.2008**
(21) Anmeldenummer: 99960895.3
(22) Anmeldetag: 11.11.1999
(51) Int. Cl.: G02B 1/00

(54) **VERFAHREN ZUM BETRIEB EINES KONFOKALEN LASER SCANNING MIKROSKOPS**
METHOD FOR OPERATING A CONFOCAL LASER SCANNING MICROSCOPE
MODE DE FONCTIONNEMENT D'UN MICROSCOPE CONFOCAL, A BALAYAGE LASER

(30) Priorität: 16.11.1998 DE 19852712
(43) Veröffentlichungstag der Anmeldung: 20.06.2001
(73) Patentinhaber: Leica Microsystems CMS GmbH, 35578 Wetzlar (DE)
(72) Erfinder: STORZ, Rafael, D-69245 Bammental (DE)
(86) Internationale Anmeldenummer: PCT/DE1999/003593
(87) Internationale Veröffentlichungsnummer: WO 2000/029876

(56) Entgegenhaltungen:
- DE-C- 3 826 317
- JP-A- 3 181 910
- PATENT ABSTRACTS OF JAPAN vol. 016, no. 476 (P-1430), 5. Oktober 1992 (1992-10-05) & JP 04 170509 A (NIKON CORP), 18. Juni 1992 (1992-06-18)
- PATENT ABSTRACTS OF JAPAN vol. 1995, no. 09, 31. Oktober 1995 (1995-10-31) & JP 07 139931 A (OMRON CORP), 2. Juni 1995 (1995-06-02)
- CORLE T R & KINO G S: "Confocal Scanning Optical Microscopy and Related Imaging Systems" 1996 , ACADEMIC PRESS , USA XP002150474 2.2.1 The Illumination Source Seite 69 -Seite 71
- BETZIG E ET AL: "FIBER LASER PROBE FOR NEAR-FIELD SCANNING OPTICAL MICROSCOPY" APPLIED PHYSICS LETTERS,US,AMERICAN INSTITUTE OF PHYSICS. NEW YORK, Bd. 63, Nr. 26, 27. Dezember 1993 (1993-12-27), Seiten 3550-3552, XP000416468 ISSN: 0003-6951
- KOECHNER W: "Solid-State Laser Engineering" 1988 , SPRINGER-VERLAG , DE XP002150475 3.5.1 Relaxation Oscillations Seite 98 -Seite 100
- PATENT ABSTRACTS OF JAPAN A

## Beschreibung

Die Erfindung betrifft ein Verfahren zum Betrieb eines konfokalen Laser Scanning Mikroskops, wobei das Lasersystem mindestens einen Festkörperlaser oder einen Diodenlaser umfasst.

In der konfokalen Laser Scanning Mikroskopie werden als Beleuchtungsquellen meist Gaslaser verwendet. Die Gaslaser beanspruchen nicht zuletzt durch deren Gasrohr einen ganz erheblichen Raum. Folglich sind kompakte Gerätebauformen der Gaslaser nicht realisierbar. Darüber hinaus weisen Gaslaser eine nur kurze Lebensdauer auf, wodurch sich ganz erhebliche Betriebskosten ergeben. Des Weiteren sind Gaslaser im Betrieb kühlungsintensiv und bedürfen einer aufwendigen Luft- oder Wasserkühlung, was wiederum einerseits Kosten verursacht und andererseits den Raumbedarf eines solchen Lasersystems erhöht. Schließlich haben Laser einen hohen Energieverbrauch und dabei eine nur geringe Effizienz.

Neben den herkömmlichen Gaslasern gibt es auch bereits Festkörperlaser. Diese wurden in der konfokalen Laser Scanning Mikroskopie bislang kaum eingesetzt, da diese während des Messprozesses stets Intensitätsschwankungen aufweisen, die wiederum das Messergebnis verfälschen bzw. Störmuster der eigentlichen Bildinformation überlagern. Intensitätsstabile Festkörperlaser erfordern aufwendige Regelmechanismen, die das Auftreten von Spiking oder Relaxationsschwankungen zumindest weitgehend vermeiden. Geregelte Festkörperlaser sind - in den bislang aus der Praxis bekannten Ausführungsformen - aufwendig und teuer. Ungeregelte Festkörperlaser haben den Nachteil einer periodischen Modenkonkurrenz, die stets zu einem gepulsten Intensitätsverhalten führt. Eine hinreichende Langzeitstabilität kann zwar durch eine periodische Modulation der Pumplichtquelle erreicht werden, die dann jedoch wegen des Spikings und wegen der Relaxationsschwingungen zu einer kurzfristigen starken Erhöhung der Laserintensität führt, die bei der Verwendung in der konfokalen Laser Scanning Mikroskopie unerwünschte Störeffekte im bildgebenden Verfahren mit sich bringt. Dies ist bei der Anwendung in der konfokalen Laser Scanning Mikroskopie nicht akzeptabel.

Spiking und Relaxationsschwingungen bzw. Relaxationsoszillationen sind Erscheinungen, die für die meisten Festkörperlaser sowie Halbleiterlaser charakteristisch sind. In diesen Phasen sind die Erholungszeiten für die Besetzungsinversion des angeregten Zustandes substantiell länger als die Verfallszeit des Laserresonators. Diese Phänomene treten bei Gaslasern nicht auf, so dass man sich bei Verwendung von Gaslasern dieser Problematik bislang kaum gewidmet hat.

Die Japanische Patentanmeldung JP 04 170509 offenbart ein Lasermikroskop mit einem optischen Unterbrecher. Der optische Unterbrecher wird dazu verwendet das im optischen System verlaufende Licht zu unterbrechen. Im Wesentlichen wird das Licht vom Laser und/oder von der Lichtquelle unterbrochen. Es ist ein optischer Detektor vorgesehen, der die Unterbrechungsfrequenz vom Licht im optischen System und eine Oszillationsfrequenz des Lasers empfängt. Durch das System wird aber lediglich die Oszillationsfrequenz des Lasers stabilisiert und es ist nichts von einer Datenaufnahme bei einer konstanten Intensität der Lichtabstrahlung durch den Laser erwähnt.

Die japanische Patentanmeldung JP 03 181919 A zeigt ein Mikroskop, das mit einer Scanneinrichtung und einer Steuereinrichtung für die Scanneinrichtung verbunden ist. Die Steuereinrichtung umfasst dabei einen Laser, der kurze Laserimpulse abgibt. Die Scanneinrichtung wird durch die Steuereinheit derart gesteuert, dass ein zweidimensionales Bild in X- und Y-Richtung aufgenommen werden kann. Die einzelnen Elemente, der Scanneinrichtung, welche für die X-Ablenkung und Y-Ablenkung verantwortlich sind, sind mit der Kontrolleinrichtung verbunden. Diese Kontrolleinrichtung ist mit einem Treiber für die Emission des Lasers verbunden. Mittels der hier offenbarten Vorrichtung wird die Emission des Lasers derart gesteuert, dass sie von der Stellung der einzelnen Ablenkspiegel des Scannsystems für die X-, bzw. Y-Richtung geregelt sind.

Unabhängig von der Anwendung bei Laser Scanning Mikroskopen wurden bereits Ansätze gemacht, um das Spiking-Verhalten von Festkörperlasern zu unterdrücken. Dazu hat man einen nichtlinearen Absorber in den Laserresonator eingebracht, der bei hohen Intensitäten starke Verluste verursacht. Letztendlich handelt es sich hierbei um eine passive Lösung. Des Weiteren hat man auch bereits einen externen Regelkreis vorgesehen, der mit einem Detektor und einem Verlustmodulator innerhalb des Resonators arbeitet. Hierbei handelt es sich um eine aktive Lösung. Bereits geringe nichtlineare Verlustelemente dämpfen das Relaxationsverhalten stark. Folglich ist dieser Ansatz nur bedingt brauchbar, da es bislang keine guten, schnell agierenden optischen Begrenzer gibt, die einen niedrigen Schwellenwert besitzen und innerhalb eines Laserresonators genügend geringe Verluste bei den gewünschten Intensitäten zeigen. Die externe Regelung, wonach außerhalb des Laserresonators ein Verlustmodulator vorgesehen ist, ist daher grundsätzlich möglich, generell aber kompliziert und teuer im Betrieb. Ein stabiles mechanisches Design des Lasers, akustische Isolation und stabile Stromquellen helfen, die nachteiligen Effekte zu minimieren.

Bei der Verwendung von Frequenz verdoppelnden Lasersystemen ist eine aktive Stabilisierung technisch äußerst aufwendig, besonders dann, wenn sie für einen externen Resonator durchgeführt wird. Bei der Verwendung von quasi phasenangepaßten Materialien ist auch ein einfacher Durchgang durch den nichtlinearen Kristall möglich, der jedoch ineffizient ist und die erforderlichen Lichtleistungen kaum erbringt.

Der vorliegenden Erfindung liegt daher die Aufgabe zugrunde, ein Verfahren zum Betrieb eines konfokalen Laser Scanning Mikroskops anzugeben, wonach die Verwendung eines Festkörperlasers oder eines Diodenlasers möglich ist und wonach ungewollte Verfälschungen der Bildinformationen wirksam vermieden sind.

Die voranstehende Aufgabe wird durch die Merkmale des Patentanspruches 1 gelöst.

Erfindungsgemäß ist die Synchronisation von Scanvorgang bzw. Datenaufnahme und einer kontinuierlichen Intensitätsemission des Lasersystems bzw. der Laserlichtquelle vorgesehen. Dabei wird erreicht, dass die Datenaufnahme mit dem Zeitfenster einer quasi kontinuierlichen Intensitatsemission des Festkörperlasers bzw. eines Diodenlasers synchronisiert wird, wodurch keine Intensitätsschwankungen des Lasersystems während des Messprozesses auftreten. Insoweit ist eine Verfälschung des Messergebnisses ausgeschlossen.

Erfindungsgemäß ist es nunmehr möglich, anstelle von herkömmlichen Gaslasern Festkörper- oder Diodenlaser im konfokalen Laser Scanning Mikroskop zu verwenden. Deren Eignung für die konfokale Laser Scanning Mikroskopie hängt von der Stabilität der Intensität der emittierten Laserstrahlung ab. Während einfache Festkörperlaser ohne Stabilisierungsmechanismen bei der Bildaufnahme in Verbindung mit einem konfokalen Laser Scanning Mikroskop typischerweise Störungen der Bildintensität aufweisen, die auf Spiking und Relaxationsschwankungen zurückzuführen sind, sind diese Phänomene während der Datenaufnahme des konfokalen Laser Scanning Mikroskops in erfindungsgemäßer Weise vermieden, werden nämlich die meist regelmäßigen Laserausgangsintensitätsschwankungen durch Synchronisation kompensiert. Dies wird letztendlich dadurch erreicht, dass unvermeidliche Störungen, wie sie beim Einsatz herkömmlicher Intensitätsregelungen unvermeidbar sind, gezielt zu einem definierten Zeitpunkt auftreten. In Kenntnis dieser Situation beginnt - bewusst bzw. geregelt - das Zeitfenster zur eigentlichen Datenaufnahme erst nach der vorgeschilderten Störungsphase.

Im Konkreten werden das einen Festkörperlaser oder einen Diodenlaser umfassende Lasersystem und das Daten aufnehmende System über eine Regeleinheit synchronisiert, so dass die Datenaufnahme in der Phase der zumindest weitgehend kontinuierlichen Intensitätsemission des Lasersystems erfolgt. Hinsichtlich der durchzuführenden Synchronisation gibt es grundsätzlich zwei Möglichkeiten.

Zum einen könnte man die Eigenschwingungen des Lasersystems derart einstellen, dass das Peak-Verhalten des Lasers als Triggerimpuls bzw. als Synchronisationsimpuls für das Daten aufnehmende System genutzt werden kann. Unter Ausnutzung der vorzugsweise einstellbaren Eigenschwingungen des Lasersystems liefert dessen Peak-Verhalten einen Synchronisationsimpuls für die Datenaufnahme. Der Synchronisationsimpuls könnte vom Lasersystem mittelbar oder unmittelbar dem Daten aufnehmenden System zugeführt werden. Im Konkreten könnte die Laserlichtquelle bzw. der Laser einen Synchronisationsausgang aufweisen, der über eine Leitung mit der Regeleinheit verbunden ist. Der Laser könnte dabei so eingestellt werden, dass ein periodisch wiederkehrender Laserausgangsintensitätsverlauf auftritt. Das Peak-Verhalten bzw. der Spike des Lasers dient dabei zur Synchronisation, und zwar vorzugsweise über die dort vorgesehene Regeleinheit, wodurch die Datenaufnahme des Laser Scanning Mikroskops getriggert wird.

Zum anderen lässt sich die Synchronisation dadurch realisieren, dass das verwendete Lasersystem über die Regeleinheit bewusst beeinflusst wird. Insoweit erhält das Lasersystem über die Regeleinheit einen Synchronisationsimpuls, worauf nach einer Totzeit der zumindest weitgehend kontinuierliche Emissionszustand des Lasersystems für eine bestimmte Zeitdauer erreicht wird, während dieser dann die Datenaufnahme erfolgt. Der Synchronisationsimpuls wird vom Daten aufnehmenden System mittelbar oder unmittelbar dem Lasersystem zugeführt. Im Konkreten erhält das Lasersystem zu einem Zeitpunkt t₀ den Synchronisationsimpuls (Trigger), damit nach einer abzuwartenden Totzeit t₁ der quasi kontinuierliche Emissionszustand für die Zeitdauer t₂ erreicht wird, der dann zur Datenaufnahme genutzt werden kann. Letztendlich dient der hier realisierte Regelmechanismus zur Intensitätsstabilisierung des Lasersystems.

Des Weiteren ist es von Vorteil, wenn vom Lasersystem eine Kontrollmeldung an die Regeleinheit erfolgt, wodurch das Vorliegen der zumindest weitgehend kontinuierlichen Intensitätsemission des Lasersystems angezeigt wird. Tritt diese Anzeige auf, lässt sich eine fehlerfreie Datenaufnahme vornehmen.

Grundsätzlich ist es möglich, dass die Aufnahme jedes einzelnen Pixels eines aufzunehmenden Bildes synchronisiert bzw. getriggert wird. Der hierzu erforderliche Synchronisationsaufwand ist jedoch aufgrund der Fülle von Synchronisationsschritten erheblich.

Ebenso ist es denkbar, dass die Aufnahme jeder einzelnen Linie eines aufzunehmenden Bildes synchronisiert bzw. getriggert wird. Entsprechend der Anzahl der insgesamt aufzunehmenden Pixels und der Dauer der zur Bildaufnahme geeigneten, weitgehend kontinuierlichen Intensitätsemissionsphase des Lasersystems ist es auch möglich, die Aufnahme im Umfange eines vorzugsweise auswählbaren Bereichs eines Bildes zu synchronisieren bzw. zu triggern. Reicht die Phase der quasi kontinuierlichen Intensitätsemission des Lasersystems aus, so könnte diese auch zur Aufnahme eines gesamten Bildes dienen, so dass mit einer einzigen Synchronisation die Aufnahme des gesamten Bildes möglich ist. Steht mehr Zeit zur Verfügung bzw. wird das Bild aus einer geringeren Anzahl von Bildpunkten zusammengesetzt, so kann die Aufnahme mehrerer Bilder durch einen einzigen Synchronisationsimpuls ausgelöst werden, so dass die Aufnahme mehrerer Bilder - gemeinsam - synchronisiert bzw. getriggert wird. Dies hängt letztendlich von der Anzahl der aufzunehmenden Bildpunkte sowie von der Dauer der weitgehend kontinuierlichen Intensitätsemissionsphase des Lasersystems ab.

Des Weiteren ist es denkbar, dass das Lasersystem frequenzverdoppelnde Eigenschaften aufweist. Das Lasersystem könnte auch mit einem optischen parametrischen Oszillator (OPO) arbeiten und zur Erzeugung von mindestens zwei unterschiedlichen Wellenlängen dienen. Dies führt zu einer ganz erheblichen Flexibilität des beanspruchten Verfahrens.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Ansprüche, andererseits auf die nachfolgende Erläuterung eines Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigt
- Fig. 1: in einer schematischen Darstellung die Funktionsweise des erfindungsgemäßen Verfahrens im Rahmen eines Blockdiagramms und
- Fig. 2: in einer schematischen Darstellung den Intensitätsverlauf der Laseremission mit dem zur Bildaufnahme nutzbaren Bereich der zumindest weitgehend kontinuierlichen Intensitätsemission.

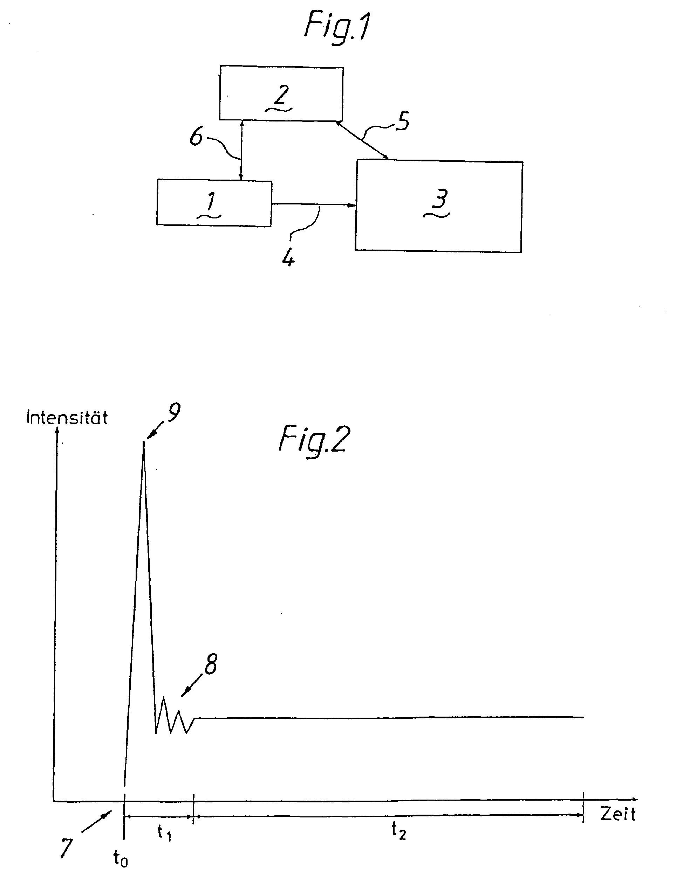

Fig. 1 zeigt im Rahmen einer schematischen Darstellung, im Rahmen eines Blockdiagramms, wie das erfindungsgemäße Verfahren prinzipiell arbeitet. Das Lasersystem 1 umfasst eine ganz besondere Laserlichtquelle, nämlich einen Festkörperlaser. In erfindungsgemäßer Weise wird der Scanvorgang bzw. die Datenaufnahme mit der Phase einer zumindest weitgehend kontinuierlichen Intensitätsemission des Lasersystems 1 synchronisiert. Dazu ist eine Regeleinheit 2 vorgesehen, so daß die Datenaufnahme in der Phase der zumindest weitgehend kontinuierlichen Intensitätsemission des Lasersystems 1 erfolgt. Bei dem Daten aufnehmenden System 3 handelt es sich im Konkreten um ein Laser Scanning Mikroskop, welches über Leitung 5 mit der Regeleinheit 2 verbunden ist. Das Lasersystem 1 ist über Leitung 6 mit der Regeleinheit 2 verbunden. Der vom Lasersystem 1 ausgehende Laserstrahl ist mit Bezugszeichen 4 gekennzeichnet. Insgesamt ist ein Regelkreis realisiert.

Im Konkreten ist das Lasersystem 1 bzw. die dort vorgesehene Laserlichtquelle über die als Synchronisationsverbindung zu bezeichnende Leitung 6 mit der Regeleinheit 2 verbunden. Die Regeleinheit 2 ist wiederum mit dem Daten aufnehmenden System 3 bzw. dem Laser Scanning Mikroskop über die dortige Leitung 5 verbunden.

Alternativ zu dem in Fig. 1 gezeigten Ausführungsbeispiel ist es auch denkbar, dass die Regeleinheit 2 der in Fig. 1 nicht gezeigten Steuereinheit des Daten aufnehmenden Systems 3 einverleibt ist, so dass es sich bei der Regeleinheit 2 durchaus auch um eine integrale Einheit des Daten aufnehmenden Systems 3 handeln kann.

Unter Bezugnahme auf Fig. 2 sei im folgenden die Funktionsweise des erfindungsgemäßen Verfahrens beschrieben, und zwar im Rahmen zweier Alternativen:

Im Rahmen des ersten Ausführungsbeispiels des erfindungsgemäßen Verfahrens wird von der Regeleinheit 2 aus ein Synchronisationsimpuls 7 ausgegeben, der zum Zeitpunkt t₀ über Leitung 6 dem Lasersystem 1 bzw. der dortigen Laserlichtquelle zugeführt wird. Das Lasersystem 1 umfaßt einen geeigneten Steuermechanismus, der aufgrund des Synchronisationsimpulses 7 den Laservorgang startet. Im Laserresonator folgen daraufhin das ansonsten unerwünschte Spiking und die Relaxationsschwingungen 8, die sich grundsätzlich negativ auf die Datenaufnahme des Systems 3 auswirken. Folglich wird die als Totzeit t₁ zu bezeichnende Zeitdauer abgewartet, wobei diese abzuwartende Totzeit t₁ vom Lasersystem 1 zurück an die Regeleinheit gemeldet werden kann.

Nach der Totzeit t₁, so bspw nach 20µm, befindet sich der Laser in einem Zustand, in dem er für die Zeitdauer t₂ eine zumindest weitgehend kontinuierliche Intensitätsemission, d.h. eine konstante Laserleistungsausgangsintensität aufweist. Bei dieser Zeitdauer t₂ handelt es sich um die eigentliche Nutzungsdauer des Lasersystems 1, die im Bereich von 50µs bis 100µs liegen kann. Diese Zeitdauer wird zur Datenaufnahme bzw. für den Meßvorgang von dem Daten aufnehmenden System 3 genutzt. Nach Ablauf der Zeitdauer t₂ könnte das Lasersystem 1 abermals über die Verbindung 6 seitens der Regeleinheit 2 mit einem Synchronisationsimpuls 7 beaufschlagt werden, um nämlich den voranstehend geschilderten Vorgang zu wiederholen. Ebenso könnte ein Signal erfolgen, wonach die Datenaufnahme nach Ablauf von t₂ nicht verwendet wird.

Im Rahmen eines weiteren Ausführungsbeispiels könnte das Lasersystem 1 bzw. die dort vorgesehene Laserlichtquelle einen Synchronisationsausgang aufweisen, der mit der Leitung 6 gekoppelt ist. Das Lasersystem 1 wird dabei derart eingestellt, dass der in Fig. 2 gezeigte Laserausgangsintensitätsverlauf periodisch wiederkehrt und daß somit das Peak-Verhalten bzw. der Spike des Lasersystems 1 zur Synchronisation über Leitung 6 der Regeleinheit 2 zugeführt wird und über Leitung 5 die Datenaufnahme des Daten aufnehmenden Systems 3 triggert.

Schließlich sei angemerkt, dass die voranstehend erörterten Ausführungsbeispiele die erfindungsgemäße Lehre erläutern, nicht jedoch auf diese Ausführungsbeispiele einschränken.

### Bezugszeichenliste

- 1: Lasersystem
- 2: Regeleinheit
- 3: Daten aufnehmendes System / Laser Scanning Mikroskop
- 4: Laserstrahl
- 5: Leitung
- 6: Leitung
- 7: Synchronisationsimpuls
- 8: Relaxationsschwingungen
- 9: Spike

## Patentansprüche

1. Verfahren zum Betrieb eines konfokalen Laser Scanning Mikroskops, das einen Festkörperlaser oder Diodenlaser umfasst, **gekennzeichnet durch** die folgenden Schritte:
- das von einer Regeleinheit (2) aus ein Synchronisationsimpuls an den Festkörperlaser oder Diodenlaser ausgegeben wird, oder das an die Regeleinheit (2) ein periodisch wiederkehrender Laserausgangsintensitätsverlauf des Festkörperlasers oder Diodenlasers zur Synchronisation zugeführt wird, und
- das der Festkörperlaser oder der Diodenlaser und ein Daten aufnehmendes System (3) über die Regeleinheit (2) derart synchronisiert werden, das die Datenaufnahme lediglich während einer Zeit (t₂) erfolgt, in der der Festkörperlaser oder Diodenlaser eine zumindest weitgehend konstante Intensitätsemission aufweist

2. Verfahren nach Anspruch 1, **dadurch gekennzeichnet, dass** der Synchronisationsimpuls (7) den Laservorgang des Festkörperlasers oder Diodenlasers startet, und dass eine vom Festkörperlaser oder Diodenlaser zurück an die Regeleinheit (2) gemeldete Todzeit (t₁) abgewartet wird, bevor die Datenaufnahme während der Zeitdauer (t₂) erfolgt.

3. Verfahren nach Anspruch 1, **dadurch gekennzeichnet, dass** der Laserausgangsintensitätsverlauf einen Spike (9) des Festkörperlasers oder Diodenlasers zur Synchronisation über eine Leitung (6) der Regeleinheit (2) zuführt und über eine Leitung (5) die Datenaufnahme des Daten aufnehmenden Systems (3) triggert.

4. Verfahren nach einem der Ansprüche 1 bis 3, **dadurch gekennzeichnet, dass** vom Festkörperlaser oder Diodenlaser eine Kontrollmeldung an die Regeleinheit (2) erfolgt, wodurch das Vorliegen der zumindest weitgehend kontinuierlichen Intensitätsemission des Festkörperlasers oder Diodenlasers während der Zeitdauer (t₂) angezeigt wird.

5. Verfahren nach einem der Ansprüche 1 bis 4, **dadurch gekennzeichnet, dass** die Zeitdauer (t₂) im Bereich von 50 µsec bis 100 µsec liegt, die für die Datenaufnahme, bzw. für den Messvorgang von dem Daten aufnehmenden System (3) benutzt wird.

6. Verfahren nach Anspruch 5, **dadurch gekennzeichnet, dass** der Ablauf der Zeitdauer (t₂) der Festkörperlaser oder der Diodenlaser abermals über die Verbindung (6) seitens der Regeleinheit (2) mit einem Synchronisationsimpuls (7) beaufschlagt wird, um die Datenaufnahme während einer Zeitdauer (t₂) erneut zu starten.

7. Verfahren nach Anspruch 5, **dadurch gekennzeichnet, dass** nach Ablauf der Zeitdauer (t₂) ein Signal erfolgt, wodurch die Datenaufnahme nach Ablauf der Zeitdauer (t₂) nicht verwendet wird.

8. Verfahren nach einem der Ansprüche 1 bis 7, **dadurch gekennzeichnet**, das die Aufnahme jedes einzelnen Pixels eines aufzunehmenden Bildes synchronisiert, bzw. getriggert wird.

9. Verfahren nach einem der Ansprüche 1 bis 7, **dadurch gekennzeichnet, dass** die Aufnahme jeder einzelnen Linie eines aufzunehmenden Bildes synchronisiert, bzw. getriggert wird.

10. Verfahren nach einem der Ansprüche 1 bis 7, **dadurch gekennzeichnet, dass** die Aufnahme im Umfange eines vorzugsweise auswählbaren Bereichs eines Bildes synchronisiert, bzw. getriggert wird.

11. Verfahren nach einem der Ansprüche 1 bis 7, **dadurch gekennzeichnet, dass** die Aufnahme eines gesamten Bildes synchronisiert, bzw. getriggert wird.

12. Verfahren nach einem der Ansprüche 1 bis 7, **dadurch gekennzeichnet, dass** die Aufnahme mehrerer Bilder durch einen Synchronisationsimpuls (7) ausgelöst wird, so dass die Datenaufnahme mehrerer Bilder - gemeinsam - synchronisiert, bzw. getriggert wird.

13. Verfahren nach Anspruch 12, **dadurch gekennzeichnet, dass** der Festkörperlaser, bzw. Diodenlaser Frequenz verdoppelnde Eigenschaften aufweist.

14. Verfahren nach einem der Ansprüche 1 bis 13, **dadurch gekennzeichnet**, das der Festkörperlaser oder der Diodenlaser mit einem optischen parametrischen Oszillator (OPO) arbeitet und zur Erzeugung von mindestens zwei unterschiedlichen Wellenlängen verwendet wird.

## Claims

1. A method for operating a confocal laser scanning microscope which comprises a solid-state laser or diode laser, **characterized by** the following steps:
- that a synchronising pulse is output from a control unit (2) to the solid-state laser or diode laser, or that a periodically recurring laser output intensity characteristic of the solid-state laser or diode laser is delivered to the control unit (2) for synchronisation purposes, and
- that the solid-state laser or the diode laser and a system (3) recording data are synchronised via the control unit (2) such that the data recording only takes place during a period (t₂) in which the solid-state laser or diode laser exhibits an at least largely constant intensity emission.

2. The method according to Claim 1, **characterized in that** the synchronising pulse (7) starts the laser operation of the solid-state laser or diode laser, and that a dead time (t₁), which is fed back from the solid-state laser or diode laser to the control unit (2), is awaited before the data recording takes place during the period (t₂).

3. The method according to Claim 1, **characterized in that** the laser output intensity characteristic delivers a spike (9) of the solid-state laser or diode laser via a line (6) to the control unit (2) for synchronisation purposes and triggers the data recording by the system (3) recording data via a line (5).

4. The method according to any one of Claims 1 to 3, **characterized in that** the solid-state laser or diode laser sends a check message to the control unit (2), whereby the presence of the at least largely continuous intensity emission of the solid-state laser or diode laser during the period (t₂) is indicated.

5. The method according to any one of Claims 1 to 4, **characterized in that** the period (t₂) which is used for the data recording or for the measuring operation by the system (3) recording data lies in the range from 50 µsec to 100 µsec.

6. The method according to Claim 5, **characterized in that**, following the expiry of the period (t₂), the solid-state laser or the diode laser is again subjected to a synchronising pulse (7) via the connection (6) by the control unit (2) in order to restart the data recording during a period (t₂).

7. The method according to Claim 5, **characterized in that** a signal is sent following the expiry of the period (t₂), whereby the data recording is not used following the expiry of the period (t₂).

8. The method according to any one of Claims 1 to 7, **characterized in that** the recording of each individual pixel of a picture which is to be recorded is synchronised or triggered.

9. The method according to any one of Claims 1 to 7, **characterized in that** the recording of each individual line of a picture which is to be recorded is synchronised or triggered.

10. The method according to any one of Claims 1 to 7, **characterized in that** the recording is synchronised or triggered in the range of a preferably selectable region of a picture.

11. The method according to any one of Claims 1 to 7, **characterized in that** the recording of an entire picture is synchronised or triggered.

12. The method according to any one of Claims 1 to 7, **characterized in that** the recording of a plurality of pictures is initiated by a synchronising pulse (7), so that the data recording of a plurality of pictures - together - is synchronised or triggered.

13. The method according to Claim 12, **characterized in that** the solid-state laser or diode laser has frequency-doubling properties.

14. The method according to any one of Claims 1 to 13, **characterized in that** the solid-state laser or the diode laser works with an optical parametric oscillator (OPO) and is used to generate at feast two different wavelengths.

## Revendications

1. Procédé pour le fonctionnement d'un microscope à balayage laser confocal qui comprend un laser solide ou une diode laser, **caractérisé par** les étapes suivantes :
- en ce qu'une impulsion de synchronisation est émise depuis l'unité de régulation (2) au laser solide ou la diode laser, ou en ce qu'une courbe d'intensité de sortie de laser récurrente de manière périodique du laser solide ou de la diode laser est acheminée à l'unité de régulation (2) pour la synchronisation, et
- en ce que le laser solide ou la diode laser et un système de saisie de données (3) sont synchronisés par l'intermédiaire de l'unité de régulation (2) de manière à ce que la saisie de données ne se fasse que pendant une durée (t₂) pendant laquelle le laser solide ou la diode laser présente une émission d'intensité au moins dans une large mesure constante.

2. Procédé selon la revendication 1, **caractérisé en ce que** l'impulsion de synchronisation (7) démarre l'opération laser du laser solide ou de la diode laser, et **en ce qu'**un temps mort (t₁) annoncé en retour par le laser solide ou la diode laser à l'unité de régulation (2) s'écoule avant que la saisie des données ne se fasse pendant la durée (t₂).

3. Procédé selon la revendication 1, **caractérisé en ce que** la courbe d'intensité de sortie de laser achemine un spike (9) du laser solide ou de la diode laser pour synchronisation par l'intermédiaire d'un câble (6) à l'unité de régulation (2) et déclenche, par l'intermédiaire d'un câble (5), la saisie des données par le système de saisie de données (3).

4. Procédé selon l'une quelconque des revendications 1 à 3, **caractérisé en ce que** le laser solide ou la diode laser transmet un message de contrôle à l'unité de régulation (2), ce qui indique l'existence de l'émission d'intensité au moins dans une large mesure continue du laser solide ou de la diode laser pendant la durée (t₂).

5. Procédé selon l'une quelconque des revendications 1 à 4, **caractérisé en ce que** la durée (t₂) utilisée pour la saisie de données ou pour la mesure par le système de saisie de données (3) est dans la plage de 50 µs à 100 µs.

6. Procédé selon la revendication 5, **caractérisé en ce qu'**une impulsion de synchronisation (7) est encore une fois appliquée à la courbe de durée (t₂) du laser solide ou de la diode laser par l'intermédiaire du raccord (6) côté unité de régulation (2) afin de redémarrer la saisie des données pendant une durée (t₂).

7. Procédé selon la revendication 5, **caractérisé en ce qu'**un signal est émis après expiration de la durée (t₂), ce par quoi la saisie des données n'est pas utilisée après expiration de la durée (t₂).

8. Procédé selon l'une quelconque des revendications 1 à 7, **caractérisé en ce que** la saisie de chaque pixel individuel d'une image à saisir est synchronisée ou déclenchée.

9. Procédé selon l'une quelconque des revendications 1 à 7, **caractérisé en ce que** la saisie de chaque ligne individuelle d'une image à saisir est synchronisée ou déclenchée.

10. Procédé selon l'une quelconque des revendications 1 à 7, **caractérisé en ce que** la saisie est synchronisée ou déclenchée pour une section de préférence sélectionnable d'une image.

11. Procédé selon l'une quelconque des revendications 1 à 7, **caractérisé en ce que** la saisie d'une image entière est synchronisée ou déclenchée.

12. Procédé selon l'une quelconque des revendications 1 à 7, **caractérisé en ce que** la saisie de plusieurs images est déclenchée par une impulsion de synchronisation (7) de manière à ce que la saisie de données de plusieurs images à la fois est synchronisée ou déclenchée.

13. Procédé selon la revendication 12, **caractérisé en ce que** le laser solide ou la diode laser présente des propriétés qui doublent la fréquence.

14. Procédé selon l'une quelconque des revendications 1 à 13, **caractérisé en ce que** le laser solide ou la diode laser fonctionne avec un oscillateur paramétrique optique (OPO) et est utilisé pour générer au moins deux longueurs d'ondes différentes.
